# EUROPEAN PATENT APPLICATION

(11) **EP 1 220 542 A1**
(43) Date of publication of application: **03.07.2002**
(21) Application number: 01307086.7
(22) Date of filing: 20.08.2001
(51) Int. Cl.: H04N 7/173

(54) **System and method for distributing video with targeted advertising using switched communication networks**

(30) Priority: 28.12.2000 US 751159
(71) Applicant: LUCENT TECHNOLOGIES INC., Murray Hill, New Jersey 07974-0636 (US)
(72) Inventor: Kaplan, Mark P., Aberdeen, New Jersey 07747 (US); Mandelbaum, Richard, Manalapan, New Jersey, 07726 (US); Matthews, Kim N., Watchung, New Jersey 07060 (US); Thomas, David, Summit, New Jersey 07901 (US); Yu, Christopher C., Westfield, New Jersey 07090 (US)
(74) Representative: Watts, Christopher Malcolm Kelway, Dr.

(57) **Abstract**

A system and method are provided for delivering broadcast-quality video with targeted advertising to viewers over the switched communication network, thereby providing a viable alternative to traditional cable, over-the-air, and direct broadcast satellite delivery systems. According to one embodiment, program streams with appropriately inserted splice points are transmitted from a network head end node to one or more egress nodes via a switched network. Demographically-targeted advertising is then inserted into the program streams at the egress nodes for subsequent delivery to individual subscribers. More specifically, targeted advertising is inserted in a program stream using a splicing method that employs adaptive synchronization to align splice points in the program and advertising streams that are being spliced together. By appropriately aligning splice points, broadcast-quality video transmission via switched networks is achieved. Because the switched network only carries program streams while advertising is inserted at the edges of the network, programs with demographically-targeted advertising can be delivered to many different subscribers without the need for using the bandwidth of the switched network to carry a unique program and advertising stream for each demographic group from the head end node. In one embodiment, the mechanism for delivery to the viewer's home or corporate office is via existing copper (e.g., twisted pair) or fiber-to-the-home (FTTH) using XDSL or Ethernet access technologies and the like.

## Description

### FIELD OF THE INVENTION

The invention relates generally to the distribution of video in communication networks and, more particularly, to the distribution of video with advertising using switched networks.

### BACKGROUND OF THE INVENTION

Commercial network television has been and continues to be a predominant medium for the distribution of entertainment programming and commercial advertising to consumers. As is well known, over-the-air, cable, and satellite-based direct broadcast systems are delivery systems that are used extensively for broadcasting high quality video transmission. Delivering broadcast video in a profitable manner has required content providers to use a business model that is based not only on standard revenue generation from subscription payments and pay per view service, but most importantly on commercial advertising. As such, the ability to deliver advertising along with programming is essential to the commercial success of the broadcast industry. The ability to attract and retain sponsors who provide the advertising is predicated on the ability to deliver the advertising in a manner that provides the most value to the sponsors.

One of the most common methods for delivering advertising is to insert advertising at the head end of a broadcast network for transmission along with the video program to the subscribers. As such, the "ad-inserted" program is transmitted through the network to all subscriber locations served by the particular delivery system. Using this approach, a single program stream must therefore be created by selecting advertisements that are best suited for the program, e.g., based on the most typical demographic characteristics of viewers expected to watch that program. However, one major drawback to this method of advertising is that a large, but generally undifferentiated audience receives the advertising. That is, advertising dollars are ineffectively spent on messages that reach the wrong audiences under the wrong circumstances. So, while current delivery methods continue to expand the reach to a growing number of subscribers, the selection of advertising to accompany programs is still based on the inefficient process of trying to determine who typically would or should be watching a program.

To apply a more targeted advertising approach using the present broadcast delivery methods would be cost-prohibitive as well as bandwidth-intensive. For example, targeted advertising based on demographics but using the current broadcast delivery method implies that, given *N* programs from which to select and *M* demographics groups, the number of program streams that would need to be generated is *N × M*. That is, a different stream is needed to separately provide the program along with targeted advertising to each demographic group. So, for 125 programs and 100 demographics groups, the total number of program streams for complete coverage would be 12,500 streams (125 x 100), which would be cost-prohibitive. Moreover, the amount of bandwidth required to support this many program streams using present broadcast technologies would also be prohibitive, e.g., 12,500 simultaneous streams at 4 Mbps per stream (50 terabits per second).

While some forms of geographically-based advertising insertion are used, these approaches are more limited in terms of reach and are still largely inefficient with regard to the ability to target individual demographic groups. For example, cable broadcast systems sometimes deliver programs that contain both the aforementioned undifferentiated advertising to subscribers as well as some type of geographically-based advertising, e.g., an advertisement for a local car dealership inserted into a splice point within the program. Because these advertisements are locally inserted based on geography alone, all subscribers within a particular geographical region, e.g., city, town, etc., therefore receive the same locally inserted advertising. Although delivered to a smaller subset of the total subscriber base, this form of delivery still does not deliver targeted advertising based on more differentiating factors, such as demographics.

Of course, the Internet offers yet another medium for the distribution of video as well as advertising to consumers. However, current IP-based networks are not a viable alternative to existing cable, over-the-air, and satellite delivery systems, primarily because of cost and quality issues. Although the point-to-point nature of an Internet connection, e.g., between a subscriber and a server, provides a medium for being able to target advertising to that particular subscriber, the quality of video transmission has been hindered by factors such as congestion of already limited bandwidth in the IP-based network, use of shared content storage, and limitations in consumers' equipment and access technology. Moreover, the point-to-point nature of connectivity becomes cost-prohibitive for a large number of subscribers. Despite advances in technologies such as cable modems, xDSL, and the like, content providers and advertising sponsors have not yet been presented with a system or method for delivering their product in a high quality, value-added manner via an Internet-based connection to consumers.

### SUMMARY OF THE INVENTION

Broadcast-quality video with targeted advertising is transmitted to viewers according to the principles of the invention by transmitting program streams from a network head end node to one or more egress nodes via a switched network and then inserting demographically-targeted advertising at the egress nodes for subsequent delivery to individual subscribers. More specifically, N program streams with splice points inserted at the head end node are distributed via multicasting through the switched network. At the network edge, advertising is inserted into the appropriate splice points in the N program streams based on viewer demographics in M demographic groups. Programs with targeted advertising can then be delivered to a viewer's television set top box, for example, in a more cost efficient and bandwidth conserving manner. That is, M demographic groups can receive targeted advertising without the need for transmitting N x M streams through the switched network. Instead, the bandwidth of the switched network is effectively conserved by only carrying N program streams, while advertising is inserted for the M demographic groups at the edge of the network. In one embodiment, the mechanism for delivery to the viewer's home or corporate office is via existing copper (e.g., twisted pair) or fiber-to-the-home (FTTH) using xDSL or Ethernet access technologies and the like.

In one illustrative embodiment, targeted advertising is inserted in the program streams using a splicing method that employs adaptive synchronization to align splice points in two bitstreams being spliced together. For example, multiple MPEG bitstreams, e.g., program streams and advertising streams, are sent to a splicer that splices from one stream to another and sends the resulting single bitstream to a destination node that provides service to subscribers. By appropriately aligning splice points, video transmission via switched networks can be achieved, according to the principles of the invention, with the same high quality that is typically only obtainable with the traditional cable, over-the-air, and satellite-based systems that employ dedicated links to the subscriber's location. As such, the present invention offers a viable alternative to the convention delivery systems, but also provides the added benefit of targeted advertising. Moreover, by using the multicasting capability of the switched network, such as that provided in an IP/ATM-based network, network delivery costs are substantially reduced as compared to the conventional methods for delivering programs and advertising.

### BRIEF DESCRIPTION OF THE DRAWING

A more complete understanding of the present invention may be obtained from consideration of the following detailed description of the invention in conjunction with the drawing, with like elements referenced with like reference numerals, in which:
FIG. 1 is a simplified block diagram of a video distribution network in which the principles of the invention can be employed;
FIG. 2 is a simplified block diagram of a head end node in the video distribution network of FIG. 1 according to one illustrative embodiment of the invention;
FIG. 3 is a simplified block diagram of a service management system element from the head end node shown in FIG. 2 according to one illustrative embodiment of the invention;
FIG. 4 is a simplified block diagram of a core transport portion of the video distribution network of FIG. 1 according to one illustrative embodiment of the invention;
FIG. 5 is a simplified block diagram of an egress node in the video distribution network of FIG. 1 according to one illustrative embodiment of the invention;
FIG. 6 is a simplified flow diagram illustrating a splicing method according to one illustrative embodiment of the invention;
FIG. 7 is a simplified block diagram of a frame structure for MPEG transport frames to illustrate the splicing method shown in FIG. 6 according to the principles of the invention; and
FIG. 8 is a simplified block diagram of a splicer element from the egress node shown in FIG. 5 according to one illustrative embodiment of the invention.

### DETAILED DESCRIPTION OF THE INVENTION

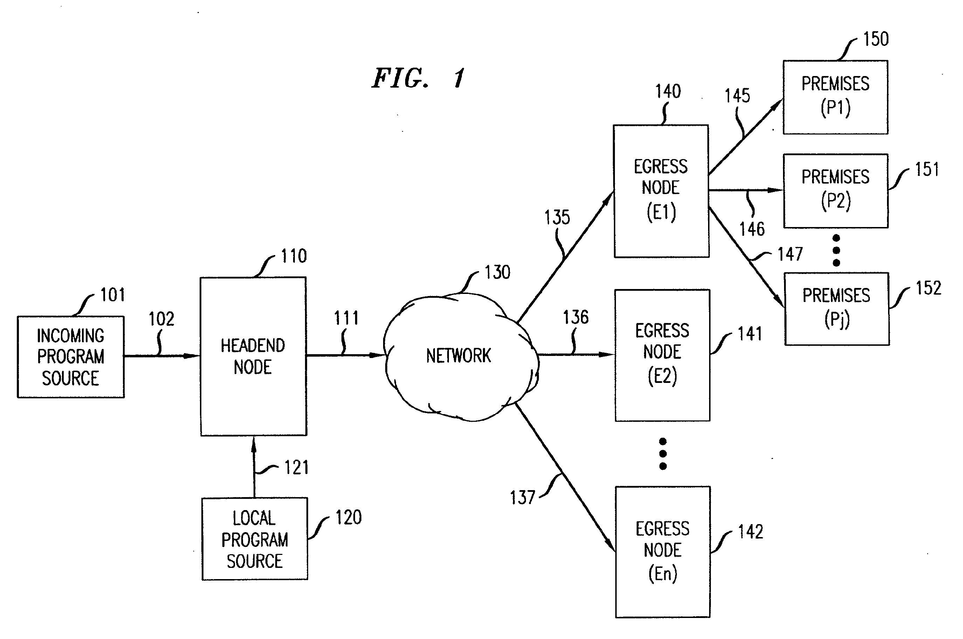

FIG. 1 shows an exemplary video distribution network 100 in which the principles of the invention can be employed. More specifically, network 100 includes an incoming program source 101 for supplying video content to head end node 110 via path 102 for subsequent distribution to subscribers in the network. By way of example, video content may be in the form of television programs supplied by content providers via satellite, cable television, over-the-air, and so on. Head end node 110 receives the video content from incoming program source 101 via path 102 as well as any video content that may optionally be supplied by local program source 120 via path 121. The specific network topology or geographical relationship between the program sources and head end node 110 is not limited in the sense that one or more of these elements may be co-located with another element. The important aspect is that head end node 110 receives video content for subsequent distribution to subscribers.

As will be described in further detail below, head end node 110 supplies one or more encoded video streams via path 111 to network 130. Continuing with the example set forth earlier, assume that there are a total of 125 programs to be distributed to subscribers and that 100 programs are supplied remotely by incoming program source 101 while 25 programs are local programs supplied by local program source 120. As such, head end node 110 would supply 125 encoded video streams to network 130. As will be described in further detail below, video streams supplied via path 111 may be encoded MPEG transport streams in one embodiment, the characteristics of which are well known to those skilled in the art. The video streams supplied via path 111 would already include splice points that can be subsequently used to insert targeted advertising. The insertion of splice points in MPEG transport streams is also well known. Video streams supplied via path 111 could also include pre-inserted advertising using the aforementioned conventional approach.

According to the principles of the invention, network 130 is intended to be a switched communication network. In one exemplary embodiment, network 130 is an ATM-based network capable of carrying IP-based traffic. However, other types of switched communication networks are also contemplated by the teachings herein. One of the important aspects of the invention is that these types of networks provide a viable, video delivery alternative to the conventional delivery mediums, e.g., cable, over-the-air, etc. For purposes of the remaining description, an ATM network will be assumed unless otherwise specified. Video streams received by network 130 are then switched, routed, or otherwise distributed through network 130 to one or more egress nodes 140-142 (shown here as E1, E2...En) via paths 135-137, respectively. Again, the geographical proximity of egress nodes 140-142 to network 130 is a matter of network design and engineering choice and is not meant to be limited. For example, egress nodes 140-142 may be described in the illustrative embodiments as constituting the edge of network 130 in contrast to nodes in network 130 that form the core transport or backbone portion of the network. In this context, network 130 would be used to transport the traffic between major network nodes for routing to the appropriate egress nodes while egress nodes 140-142 at the network edge would be used to distribute traffic to individual subscribers.

According to one illustrative embodiment of the invention, each of egress nodes 140-142 receives the video streams supplied by head end node 110 via network 130. Using the above example, network 130 delivers 125 video streams (e.g., programs) via each of paths 135-137 to egress nodes 140-142, respectively. So, in a subscriber network having 100,000 subscribers serviced by 20 egress nodes where each egress node services approximately 5,000 subscribers, each of the egress nodes would receive 125 programs for delivery among its 5,000 subscribers.

As will be described in more detail below, targeted advertising is spliced into video streams at the egress nodes based on viewer demographics. Accordingly, one advantage of the invention over the prior video delivery methods is that cost and bandwidth for transmitting the video streams through network 130 (e.g., delivery costs) are substantially reduced because advertising is inserted at the edge of the network instead of at head end node 110. Each of egress nodes 140-142 services one or more premises, e.g., viewer locations. For simplicity of illustration and explanation, only egress node 140 is shown to be coupled to premises 150-152 (shown here as P1, P2,...Pj) via paths 145-147, respectively. Egress node 140 would therefore insert targeted advertising based on demographics for subscribers serviced by egress node 140 and supply a single video stream (e.g., program) with targeted advertisements to a respective premises, e.g., a single video stream with targeted advertisement for premises 150, a single video stream with targeted advertisement for premises 151, and so on. By way of example, delivery of the video stream with targeted advertisement can be via xDSL (digital subscriber line) connectivity to a set top box (STB) at a premises.

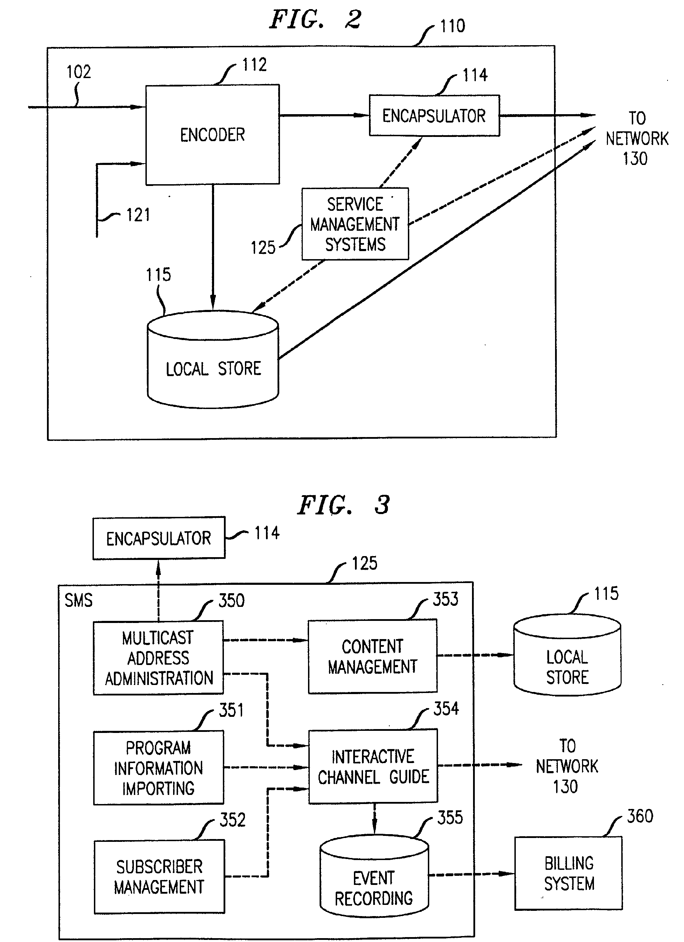

FIG. 2 shows an exemplary embodiment of head end node 110 from FIG. 1 according to the principles of the invention. As shown, head end node 110 includes encoder 112, local store 115, encapsulator 114 and service management system 125. Encoder 112 receives programs via path 102 from remote content providers via path 102. As previously described, the incoming programs may be provided via cable television, over-the-air, satellite systems and so on. Encoder 112 also receives local programs via path 121 as previously described. Using well-known techniques, encoder 112 encodes the incoming video programs into a format such as MPEG, by way of example, and inserts so-called splice points in a conventional manner to accommodate subsequent insertion of advertisements as will be described below in more detail. Using MPEG-2 as an example, encoder 112 supplies a 4 Mbps transport stream with splice points inserted at the appropriate "I Frames" within the transport stream. Encoded video with inserted splice points is then encapsulated into an appropriate format by encapsulator 114 for transmission via network 130. Continuing with the above example, encapsulator 114 converts MPEG transport streams into a format suitable for transmission over network 130. The selection of appropriate transport protocols and, consequently, the selection of an appropriate encapsulator, will depend in part on the type of network being used to carry the traffic. Various protocol formats that are suitable for transporting the encoded video will be apparent to those skilled in the art.

As described, network 130 in one illustrative embodiment can be a quality-of-service type network such as an ATM network and encoded video can be packetized as Internet Protocol (IP) units for transport via ATM cells in the ATM network. In this example, encapsulator 114 would therefore be an IP encapsulator for converting MPEG transport streams into packetized format (e.g., encapsulated by IP headers and so on) and then mapped into ATM cells according to well-known techniques (e.g., using AAL protocols) for transmission via ATM network 130. This example is meant to be illustrative only and not limiting in any way. Accordingly, other protocol formats as well as the apparatus and methods for converting between protocols will be apparent to those skilled in the art.

Head end node 110 also includes local store 115 that may be used to store video that is to be delivered to network 130 at a later point in time or on an on-demand type basis, e.g., a video-on-demand (VOD). Local store 115 therefore receives encoded video with appropriate splice points inserted from encoder 112. The video transport streams stored in local store 115 can also be pre-encapsulated with an IP header and mapped into ATM cells, as previously described, for transmission over network 130 at a subsequent point in time.

As shown in FIG. 2, head end node 110 also includes service management system 125 for administering, managing, and provisioning the services provided by video distribution network 100. FIG. 3 shows one exemplary embodiment of service management system 125 according to the principles of the invention. More specifically, FIG. 3 illustrates, in simplified block diagram form, some of the functions that could be performed by service management system 125. In general, service management systems are well known to those skilled in the art of telecommunications. By way of example, these systems typically include one or more servers, computer workstations, storage devices, and various software applications for carrying out one or more functions associated with the administration, management, and provisioning of services in a network. For the present embodiment, service management system 125 includes appropriate hardware and/or software for performing multicasting address administration (block 350), program information importing (block 351), subscriber management (block 352), content management (block 353), interactive channel guide functions (block 354), and event recording (block 355).

Referring to FIGS. 2 and 3, service management system 125 communicates (as indicated by the dotted lines) with encapsulator 114 and local store 115 within head end node 110 and also with network 130. More specifically, service management system 125 communicates with encapsulator 114 for multicasting address administration (block 350) and with local store 115 for content management functions (block 353). FIG. 3 also illustrates a typical connection between service management system 125 and billing system 360. In one embodiment, communications between service management system 125 and network 130 can occur using an IP-based network. For example, as will be described in further detail, subscriber information such as demographics of individual subscribers can be supplied by service management system 125 through network 130 to facilitate subsequent ad-insertion functions at egress nodes.

In one illustrative example, subscriber management function 352 of SMS 125 would have a record of information about subscribers to a service, such as: programs purchased by a subscriber; payment contract for a subscriber (e.g. with advertisement every 15 minutes, with no advertisements, etc); information about a subscriber's set top box (STB); demographics information about a subscriber; usage logs; and so on. SMS 125 can also be used to assign the channels to the programs for selection by the STBs in the premises. SMS 125 also maintains an inventory of which advertisements are available and the rules for inserting them into specific programs transmitted and demographic population served. SMS 125 also would have knowledge of the schedules of the programs, e.g., from a pre-provisioned entry.

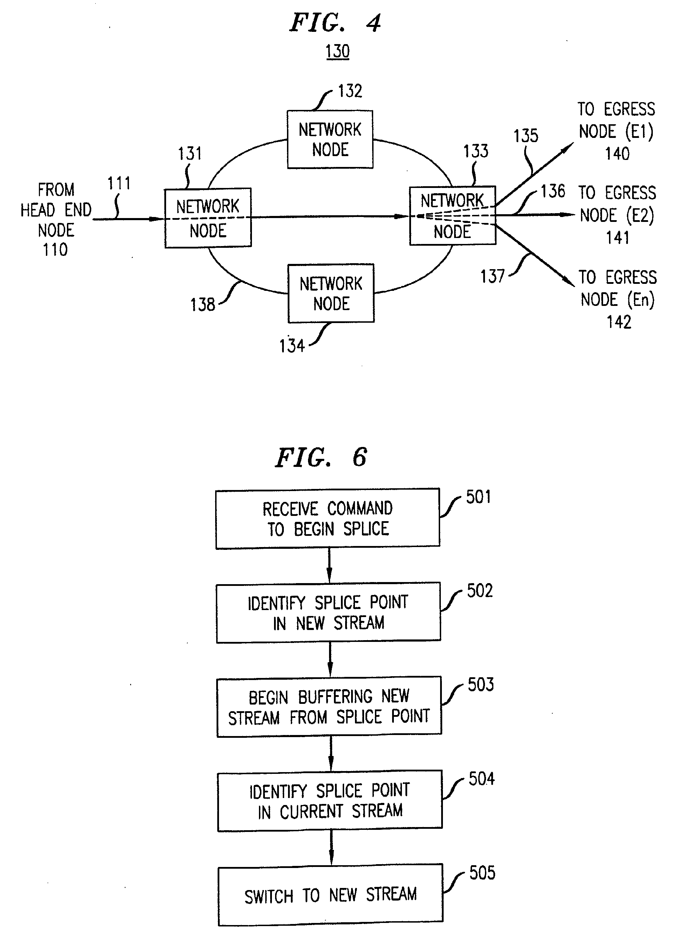

FIG. 4 shows one illustrative embodiment of network 130 according to the principles of the invention. As previously described, it is contemplated that network 130 is a switched network to be used for delivering video services according to the principles of the invention. It is further contemplated that network 130 would provide an alternative medium for delivering video service to subscribers instead of the current delivery mediums, e.g., cable-based systems, over-the-air broadcast systems, direct broadcast satellite-based systems, and so on. As such, network 130 may be an ATM-based network, an IP-based network with quality of service features, and the like.

As shown, network 130 includes exemplary network nodes 131-134 interconnected via transmission path 138. The topology and specific connectivity aspects of network 130 are not meant to be limited in any way by the embodiments shown and described herein. For example, network 130 may comprise an ATM network interconnected by an optical transmission system, e.g., a dense wavelength division multiplexed (DWDM) system and so on. Similarly, the specific topology (e.g., ring, mesh, etc.) is a matter of design choice. The important aspect of the invention is that video services are delivered via a switched transport network with broadcast quality.

In FIG. 4, network 130 receives the encoded video (with inserted splice points) via path 111 from head end node 110 and routes the encoded video, as appropriate, through network nodes 131-134. The encoded video is then replicated for distribution to each of the designated egress nodes 140-142 via paths 135-137, respectively. As such, each of the designated egress nodes 140-142 will receive the same program streams via network 130, whether or not those egress nodes are serviced by the same network nodes 131-134 in network 130. Continuing with the above example in which head end node 110 supplies 125 program streams (with inserted splice points) to network 130, each of egress nodes 140-142 would therefore receive the 125 program streams via paths 135-137, respectively, for subsequent delivery among the subscribers serviced by egress nodes 140-142. Routing of the program streams to the appropriate egress node or nodes is a function of network 130 that does not require detailed explanation as those skilled in the art will readily understand many different alternatives for transporting the program streams through network 130 to the appropriate egress nodes using well-known techniques and network architectures. By way of example, a ring network with a drop and continue capability could be effectively used to distribute the same program stream to multiple egress nodes. Other alternatives will also be apparent to those skilled in the art.

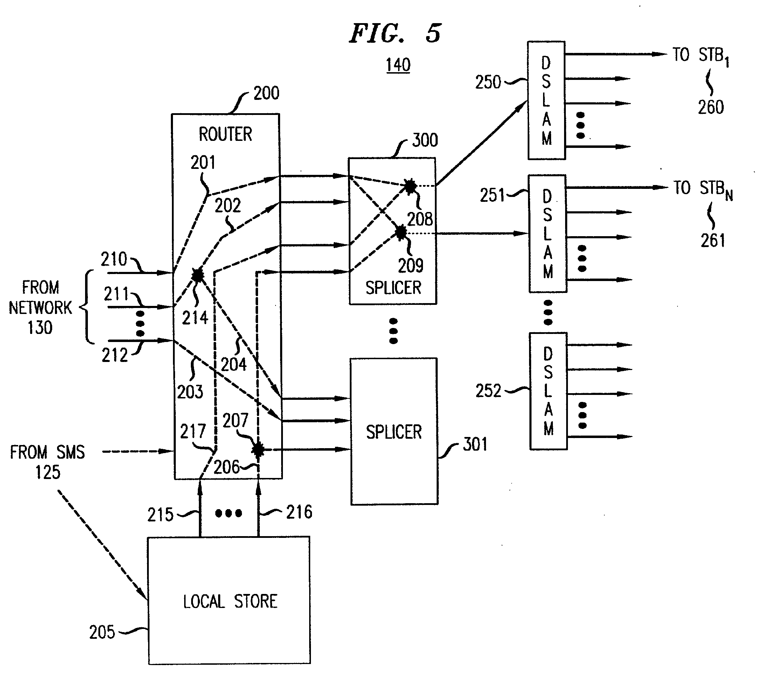

FIG. 5 shows an exemplary egress node 140 according to one illustrative embodiment of the invention. As shown, egress node 140 includes router 200, local store 205, splicers 300-301, and Digital Subscriber Line Access Multiplexers (DSLAMs) 250-252. Each of DSLAMs 250-252 may provide service to one or more subscribers connected, for example, via xDSL modems and set top boxes (STBs), two of which are shown here as STB₁ 260 and STB_{N} 261. It should be noted that other egress node configurations are also contemplated by the teachings herein. For example, DSLAMs 250-252 may also be located remotely from egress node 140. In particular, it may be desirable to place the DSLAM as close as possible to the subscribers' premises. Regardless of physical proximity, it is assumed for this illustrative embodiment that DSLAMs 250-252 are logically related to egress node 140. Other configurations will also be apparent to those skilled in the art based on the type of equipment used for providing a similar functionality as is provided by DSLAMs 250-252.

Router 200 receives the program streams from network 130 as shown by arrows 210-212. In one embodiment, router 200 has multicasting capability for routing or otherwise distributing the program streams to the appropriate splicers 300-301 as shown by the dotted lines within router 200 and as will be described in further detail below. Multicasting is a well-known communication technique whereby traffic (e.g., video) is delivered simultaneously to a group of clients simultaneously. Unlike broadcast transmission, multicast clients receive the traffic only if they have previously elected to do so, e.g., by joining the specific multicast group address. That is, a multicast client would inform a router that it wants to receive a multicast stream. When so informed, the router then replicates the traffic to that client and to all other clients who join the session. Routers with multicasting capability are commercially available and are typically used in the networks to learn which sub-networks have active clients for each multicast group, thereby conserving bandwidth for the other parts of the network where traffic does not need to be delivered. Multicasting networking techniques are well known to those skilled in the art and are contemplated for use in the illustrative embodiments of the invention because of the added benefit of bandwidth conservation and more efficient delivery across the networks.

Local store 205 is used to store advertisements that are supplied to router 200 via paths 215-216, for example. These advertisements are subsequently retrieved for routing to an appropriate splicer 300-301. For simplicity of illustration, only two splicers are shown, although this example is not meant to be limiting. Splicers 300 and 301 are also commercially available and various splicing techniques are well-known to those skilled in the art. According to the principles of the invention, splicers 300-301 receive selected program streams supplied to router 200 as well as advertisements retrieved from local store 205 and supplied to router 200. Splicers 300-301 then splice in the appropriate advertisements into the appropriate program streams for transmission to appropriate DSLAMs 250-252. In one illustrative embodiment, DSLAMs 250-252 then route the program streams to a subscriber's set top box (STB), e.g., STB 260-261 via a DSL connection. The elements and operation of splicers 300-301 will be described in further detail below.

DSLAMs, STBs, and DSL service are well-known to those skilled in the art. In xDSL (digital subscriber line), for example, data is transmitted along with voice by utilizing the previously unused frequencies on existing telephone lines, e.g., twisted pair copper lines. In ADSL (asymmetric DSL), data is moved more quickly downstream to the subscriber premises than upstream, e.g., on the order of 9 Mbps downstream and 1.5 Mbps upstream on standard, analog phone lines. To receive DSL service, a DSL modem is typically located at the subscriber's premises. The connection between a subscriber's DSL modem and egress node 140 (FIG. 5) can be achieved in any number of ways using various, commercially available equipment. In one exemplary embodiment, a DSLAM (digital subscriber line access multiplexer) is used. A DSLAM is a network device that receives signals from multiple subscribers' DSL connections (e.g., from a plurality of DSL modems) and multiplexes the signals for transport via a higher speed, higher bandwidth connection, e.g., ATM, IP, and so on. Various DSLAMs are commercially available that are suitable for use in the present invention; however, it should also be noted that other equipment may be equally suitable and the embodiments shown and described herein are not meant to be limiting in any way. At the subscriber's location, a STB (set top box) is used for receiving the video delivered via the DSL modem connection. Again, STBs are commercially available and the operation thereof is well-known to those skilled in the art.

In operation, router 200 in egress node 140 receives individual program streams from network 130 via paths 210-212. It should be noted that any number of program streams may be supplied to egress node 140, limited only by the type of router being used. However, for simplicity of explanation and illustration, only three program stream inputs are shown. Continuing with the previous example of 125 program streams at a standard MPEG rate of 4 Mbps being delivered by head end node 110 via network 130, 125 program streams are therefore received at egress node 140. Router 200 also communicates with service management system (SMS) 125, e.g., to obtain signaling via an IP connection. Signaling can also occur between router 200 and set top boxes (STBs) at subscribers' premises although not shown in FIG. 5. Signaling via the IP paths can also occur between router 200, splicers 300-301, and local store 205. For example, IP signaling from SMS 125 would be used in one embodiment to identify which advertisement is to be spliced into a program stream, e.g., based on subscriber management functions in SMS 125 and so on. IP signaling can also be used to transport splice instructions to be used by splicers 300-301.

In response to signaling instructions received via SMS 125, router 200 distributes, e.g., by multicasting, selected program streams received via paths 210-212 and selected advertisements received from local store 205 via paths 215-216 to an appropriate splicer 300-301. According to one aspect of the invention, targeted advertising is provided to subscribers. To do so requires that the insertion of advertising, "ad-insertion", be carried out based on demographics and so on.

The subscriber management function of SMS 125 provides the necessary signaling information and instructions to router 200, local store 205, and splicers 300-301 to effect this targeted advertising based on demographics. SMS 125 also maintains an inventory of the available advertisements, demographic population served, and the rules for inserting the advertisements into specific program streams transmitted. SMS 125 also maintains information about program schedules and so on. Given the stored rules in SMS 125 about the subscriber, demographics of the subscriber, program to be transmitted, advertisement(s), and so on, SMS 125 specifies the advertisement(s) to be spliced into the program stream(s) and specifies which ad-inserted streams are to be delivered to the different subscribers. For example, SMS 125 sends a message to an appropriate splicer to identify the specific advertisement to be retrieved from local store 205 based on a particular subscriber's demographic grouping and the program being transmitted. Alternatively, SMS 125 could send the "rules" for selecting the appropriate advertisement instead of specifying a particular advertisement.

Returning to the exemplary embodiment shown in FIG. 5, splicers 300-301 receive the appropriate feeds (i.e., program and advertising streams) from router 200 based upon the subscribers served downstream from respective DSLAMs 250-252. As shown, program stream 210 is routed to splicer 300 via path 201, program stream 211 is routed to splicer 300 via path 202, advertisement stream 215 is routed to splicer 300 via path 217, and advertisement stream 216 is routed to splicer 300 via path 206. To further illustrate the multicasting aspects of this configuration, program stream 211 is split at point 214 and routed to splicer 301 via path 204 and advertisement stream 216 is split at point 207 and routed to splicer 301. It should be noted that this example is meant to be illustrative in that any combination of program stream and advertisement can be routed to any number of splicers so that various combinations of ad-inserted program streams can be subsequently delivered to subscribers.

For example, assume that subscribers serviced by DSLAMs 250-252 coupled to splicer 300 are supposed to receive program streams 210 and 211 and that 50 unique advertising streams (advertisement stream 215 and 216 plus 48 others that are not shown) are appropriate based on demographic groupings. In this example, router 200 would route program streams 210 and 211 to splicer 300 as well as 50 advertising streams (not shown) retrieved from local store 205. As such, splicer 300 would receive 52 separate streams as input. Upon receiving these input streams, splicer 300 splices selected advertising streams with selected program streams in response to information received from SMS 125. As shown in FIG. 5, program stream 210 is spliced together with advertising stream 215 at splice point 208 and supplied to DSLAM 250. Program stream 210 is also spliced together with advertising stream 216 at splice point 209 and supplied to DSLAM 251. A more detailed description of exemplary splicing techniques according to the principles of the invention will be described below.

Subscribers serviced through splicer 301 can also receive a combination of program streams and advertising streams. These streams may be separate (e.g., different) from the streams being supplied to splicer 300 or could be some of the same streams that are split off and provided to both splicers. For example, FIG. 5 shows that program stream 212 is only routed to splicer 301 via path 203, while program stream 211 and advertising stream 216 are multicast to both splicers 300 and 301. This simplified example therefore illustrates the flexibility and scalability of targeted advertising as provided according to the principles of the invention.

As shown, each of DSLAMs 250-252 is capable of receiving a prescribed number of ad-inserted program streams for subsequent delivery to subscribers' premises serviced by the respective DSLAMs, whereby each program stream includes the program to be watched by the subscriber along with the specific advertisement that is associated with the subscriber's demographic profile. DSLAM 250 is therefore capable of delivering a unique ad-inserted program stream to each of its subscribers. As shown in the present embodiment, set top boxes (e.g., STB₁ 260, STB_{N} 261) are connected to DSLAMs 250 and 251, respectively. By way of example, connectivity from the DSLAMs to STBs can be via an xDSL interface. Although not explicitly shown, STBs typically would also communicate with the egress node, e.g., to send program changes, requests for new programs, and so on. As such, the egress node could either locally implement the change or request (e.g., switching channels) or further communicate the subscriber request to SMS 125 as appropriate.

Targeted advertising is therefore achieved according to the principles of the invention by splicing advertisements, in response to information received from SMS 125, into program streams at the egress node. Importantly, bandwidth in the transport network is substantially conserved with this approach as opposed to the prior methods whereby unique streams (program plus selected advertising) are provided from the head end of a network. In the example used in the above embodiments, 125 program are delivered from head end node 110 through network 130 to each of the egress nodes, whereat any number of advertising streams are then inserted based on demographic considerations of the 5,000 subscribers. By comparison, a prior art approach to targeted advertising would possibly require as many as 5,000 unique streams of program plus advertising to be delivered from the head end node through the network.

To further appreciate these bandwidth conservation aspects, the following example illustrates the benefits of targeted ad-insertion according to the principles of the invention. Assume there are 125 program streams supplied through network 130 to router 200 for subsequent delivery to 5,000 subscribers constituting 10 different demographic groups. Assume further that, for programs being broadcasted in the 8:00-9:00 pm time frame, there are 25 different advertisements. As such, there are 250 unique advertising streams (25×10) at any splice point interval (e.g. 15 minutes.). This example implies that the 375 input streams (125 program, 250 advertising) can therefore constitute 31,250 unique streams (125 × 250). However, only 125 program streams are transmitted through network 130 while the 31,250 unique streams of programs with targeted advertising are created and delivered at the egress node. As such, bandwidth in the transport network, i.e., network 130, is spared.

The principles of the invention can also be used in conjunction with other known advertising delivery techniques. For example, some advertising can be globally inserted at the head end for delivery to all subscribers in the network in addition to targeted advertising added at the egress nodes as previously described. In this manner, content providers and advertisers can effectively reach all subscribers, e.g., with ads of general interest, as well as target specific interest advertisements to a subset of subscribers.

Other modifications to the aforementioned embodiments will also be apparent to those skilled in the art and are contemplated by the teachings herein. For example, demographically-targeted ad-insertion has been shown to occur after multicasting of the program streams in several exemplary embodiments. That is, program streams are replicated for distribution to specific subscribers and demographically-targeted advertising is then spliced into the program streams. In one exemplary variation, splicing may occur upstream from the multicasting engine so that advertising is inserted before program streams are multicasted to specific subscribers. In this manner, ad-inserted program streams can be individually multicasted to subscribers comprising a common demographic. Many other possible variations for delivering cost-effective, targeted, low bandwidth advertising according to the principles of the invention will be apparent to those skilled in the art and are contemplated by the teachings herein.

Splicing of program streams and advertising streams according to one illustrative embodiment of the invention will now be described in further detail. In the general context of MPEG, splicing is a technique that permits the selection of one of many received MPEG encoded programs for retransmission. As a new program is selected, transition to the next source is performed so that the transmitted, compressed program does not violate the MPEG specifications, thereby allowing any decoder to display the transition "seamlessly" (e.g., substantially without errors). In the context of the present invention, advertising streams are spliced into program streams in a process referred to as "ad-insertion". Multiple MPEG bitstreams, e.g., program streams and advertising streams, are sent to a splicer that splices from one stream to another and sends the resulting single bitstream to a destination node, e.g., a DSLAM. There are specific points within a bitstream at which another bitstream can be spliced without causing artifacts and distortion when the video is decoded. Because the multiple bitstreams are started at random times with respect to each other, adaptive synchronization is employed according to the principles of the invention to align splice points between bitstreams, thereby ensuring high quality video transmission via switched networks akin to that obtained in the traditional cable, over-the-air, and satellite-based systems that employ dedicated links to the subscriber's location.

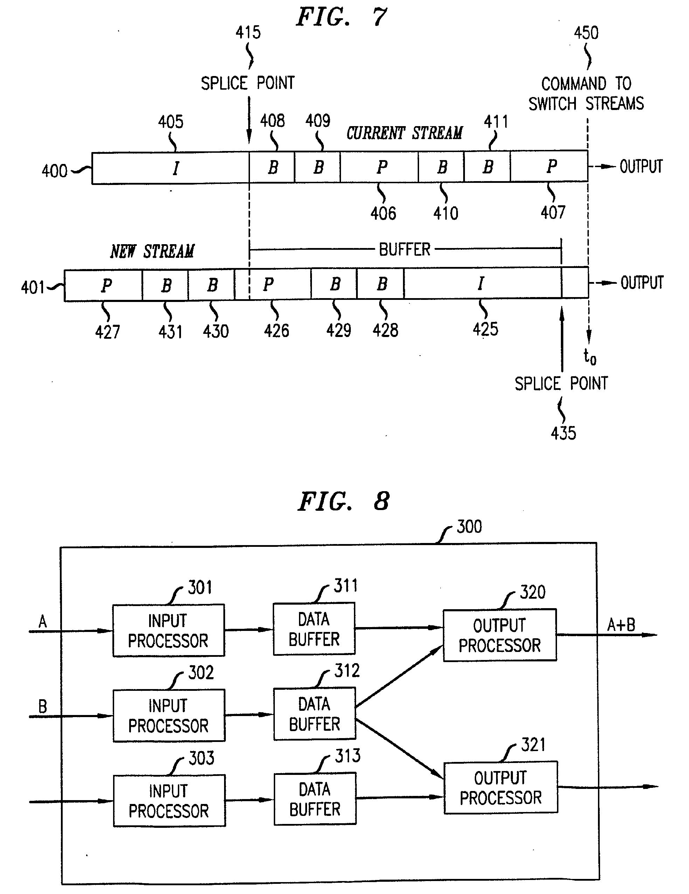

A splicing technique according to the principles of the invention will now be described in the context of the flow diagram in FIG. 6 and the exemplary frame formats shown in FIG. 7. Referring first to FIG. 7, current bitstream 400 is representative of a program stream while new bitstream 401 is representative of an advertising stream that needs to be spliced into program stream 400. Each of bitstreams 400 and 401 are exemplary MPEG bitstreams in that they comprise a combination of various MPEG frame types including: I frames based on intraframe coding; P frames which are coded based on forward prediction; and B frames which are coded based on temporal bi-directional prediction, e.g., based on a predicted future frame and on a past frame. As is well-known, a collection of I, B, and P frames constitutes a "Group of Pictures (GOP)". In the exemplary bitstreams shown in FIG. 7, current (program) stream 400 includes I frame 405, P frames 406 and 407, and B frames 408-411. Similarly, new (advertising) stream 401 includes I frame 425, P frames 426 and 427, and B frames 428-431. It should be noted that the frames of each of streams 400 and 401 are shown with time moving from right to left. As is standard in MPEG transmission, splice points are inserted prior to I frames. Accordingly, splice point 415 is previously inserted (e.g., at head end node 110 as previously described) prior to I frame 405 of current (program) stream 400 while splice point 435 is previously inserted prior to I frame 425 of new (advertising) stream 400.

Referring now to both FIGS. 6 and 7, a command to splice advertising stream 401 into program stream 400 is received at some arbitrary time to in step 501 (e.g., via SMS 125 as previously described). Advertising stream 401 is examined in step 502 until a splice point is found, e.g., splice point 435, at which time buffering begins on advertising stream 401 (step 503). Program stream is then examined in step 504 until a splice point is determined, e.g., splice point 415. Once found, a switch is made to advertising stream 401 (in step 505) so that the contents of advertising stream 401 are emptied, e.g., so that the advertisement is spliced into the program stream. At this point, the buffer of program stream 400 is switched to drain mode.

It should be noted that, assuming constant bit-rate sources, the buffer fullness of advertising stream 401 remains at some constant Bᵥ, e.g., emptying at the same rate that video is entering. This buffering therefore translates to delay of the video at a destination node. When advertising stream 401 is spliced into program stream 400, a switch is initiated back to program stream 400. The problem of video delay growing without bound, e.g., as the buffer fullness of the buffer associated with program stream 400 increases as compared to constant Bᵥ, is avoided by initially looking for a splice point in the buffer. In this manner, the greatest delay that can be incurred will be the maximum distance between splice points in a bitstream.

With the splice points properly aligned by the adaptive synchronization procedure according to the principles of the invention, various timing related values in the bitstream are restamped. As is well-known, program clock references (PCR), decoding time stamps (DTS), and presentation time stamps (PTS) are included in MPEG transport streams, wherein a PCR is used for synchronization between the encoder and decoder, a DTS is used to indicate when a frame is to be decoded, and a PTS is used to denote when a frame is presented to the output device for display. By way of example, consider the frame coding sequences of an IBBP group of pictures. Since the P frame is decoded before the B frames but presented after the B frames, the PTS associated with the P frame is greater than its associated DTS. Within an MPEG transport stream, the relative values of the PCR's, DTS's, and PTS's remain constant. When splicing from program stream 400 to advertising stream 401 according to the embodiment described herein, program (current) stream 400 is terminated on a frame boundary. The DTS of the next I frame in program stream 400 is then calculated and all the timing values in the advertising (new) stream 401 are offset such that the next I frame has the calculated DTS.

According to another aspect of the invention, decoder buffer overflow and underflow are prevented with a buffer equalization technique. More specifically, decoder buffer overflow is avoided by padding the last frame of the bitstream being spliced with trailing zeros. To prevent decoder buffer underflow, a blank P frame is constructed and inserted that has motion vectors of magnitude zero and compensation error of magnitude zero. Effectively, the decoded frame will be a repeat of the previous frame. The number of bits of a constructed blank frame is very small, so this is adjusted by padding with trailing zeros to equalize the buffer fullness state.

FIG. 8 shows one illustrative embodiment of splicer 300 (from FIG. 5) which can support multiple splicing functions within the same physical unit. For example, splicer 300 can insert multiple advertisements into a single program stream, insert the same advertisement into multiple program streams, as well perform many other splicing variations. More specifically, FIG. 8 is a simplified functional block diagram of splicer 300 comprising multiple instances of similar functional units and their inter-communication paths. As shown, splicer 300 includes a plurality of input processors 301-303, a plurality of data buffers 311-313, and a plurality of output processors 320-321. Specific implementations for input processors, data buffers, and output processors will be apparent to those skilled in the art. By way of example, data buffers 311-313 can be implemented with conventional First-In-First-Out (FIFO) buffers.

According to the principles of the invention, splicer 300 receives multiple streams of data, which includes program streams and advertising streams, splices selected advertisements in appropriate program streams, and outputs program streams containing advertisements. More specifically, each of input processors 301-303 receives a single stream of compressed data (e.g., from router 200 in FIG. 5) and stores this data in one of the corresponding data buffers 311-313. The single streams may represent the program streams supplied to router 200 (FIG. 5) from network 130 or may represent the advertisements retrieved from local store 205 and supplied via router 200. Input processors 301-303 are also used for other functions such as, for example, preprocessing, time recording, parsing of the stream that may be required later, and maintaining the integrity of the data buffers and the information stored therein. In one embodiment, data buffers 311-313 are ring buffers of programmable size (e.g., typically equivalent to approximately 1 second in length) and are used for storing the received input stream and pointers to useful information, e.g., splice points, timing fields, and so on. Each of data buffers 311-313 is globally accessible to all of the active output processors 320-321, thereby allowing a single input stream to be a source to multiple outputs. In this way, advertisements can be spliced into multiple program streams. Output processors 320-321 are used for the seamless transition between input streams. While not actively in transition, an output processor will pass through the correctly formatted and timed output of the data in a data buffer.

In one illustrative embodiment, a splice is performed either in response to an external SNMP command or, if so provisioned, by the presence of data on another stream. Based on one of these occurrences, an output processor, e.g., output processor 320, will attempt to change the source of its output stream. In the example shown in FIG. 8, output processor 320 will initially continue to transmit stream A until the next packet in stream A to be sent indicates a splice point. Splicer 300 will then find the first splice point in the data buffer of stream B to become the next packet to be transmitted. After splicing, output processor 320 outputs stream A with data from stream B spliced therein. In the case that no splice point is found in the incoming stream, splicer 300 will "cut" between the two streams at the next program clock reference (PCR). The discontinuity flag of the first packet will be set and an SNMP trap signal will be generated. This type of transition will generally generate errors at the decoder.

Output processors 320-321 are also used for both the validity of the syntax of the output stream and the timing of the packets transmitted out to the network. In order to provide a generally valid output, output processors 320-321 must ensure the correctness of the continuity counters of each PID, the DTS's and PTS's, and the PCR. The timing of the output is provided by deriving the difference between the incoming clock references relative to the local clock and maintaining a fixed delay for packets passing through the system.

As mentioned previously, control of splicer 300 can be achieved, in one embodiment, using a simple set of well-known SNMP-based commands. This interface therefore allows for dynamic creation and removal of splicers without impairing the output streams, e.g., up to a throughput limit. It should be noted that other splicing techniques may be employed in conjunction with the embodiments of the invention shown and described herein. As such, the exemplary splicing scheme described in the preceding embodiment is meant to be illustrative and not limiting in any way.

The foregoing embodiments are merely illustrative of the principles of the invention. Those skilled in the art will be able to devise numerous arrangements, which, although not explicitly shown or described herein, nevertheless embody those principles that are within the scope of the invention. Accordingly, the scope of the invention is limited only by the claims appended hereto.

It should also be noted that the functions of the various elements shown in the drawing may be provided through the use of dedicated hardware as well as hardware capable of executing software. When provided by a processor, the functions may be provided by a single dedicated processor, by a single shared processor, or by a plurality of individual processors, some of which may be shared. Moreover, a "processor" or "controller" should not be construed to refer exclusively to hardware capable of executing software, and may implicitly include, without limitation, digital signal processor (DSP) hardware, read-only memory (ROM) for storing software, random access memory (RAM), and non-volatile storage.

## Claims

1. A method of delivering video via a switched communication network comprising:
transmitting one or more program streams from a head end node to one or more egress nodes via the switched network; and
inserting one or more advertisements into the one or more program streams at the one or more egress nodes for delivery to individual subscribers such that a particular subscriber receives a program stream with an advertisement that corresponds to demographic characteristics of that particular subscriber.

2. The method according to claim **1,** further comprising the step of inserting splice points in the one or more program streams at the head end node.

3. The method according to claim **2**, wherein inserting one or more advertisements comprises splicing an advertising stream with a program stream, wherein the advertising stream includes the one or more advertisements.

4. The method according to claim **3**, wherein the step of splicing further comprises:
responsive to a command to begin splicing, identifying a splice point in the advertising stream;
buffering frames after the splice point in the advertising stream;
identifying a splice point in the program stream;
switching to the advertising stream; and
outputting an ad-inserted stream that includes frames from the program stream and advertising stream,
whereby the program stream and advertising stream are adaptively synchronized by aligning the splice points to enhance the quality of video transmission.

5. The method according to claim **1,** wherein the step of inserting one or more advertisements includes:
receiving subscriber management information; and
selecting a particular advertisement based on the subscriber management information; and
retrieving the particular advertisement at the one or more egress nodes.

6. In a video distribution network including a head end node, one or more egress nodes, a service management system, and a switched communication network, wherein the head end node supplies one or more program streams via the switched communication network to the one or more egress nodes, a system for delivering video comprising:
at an egress node,
a router for receiving the one or more program streams,
a storage element for storing advertisements, and
a splicer element for inserting one or more of the stored advertisements into the one or more program streams for delivery to individual subscribers,
wherein a particular subscriber receives a program stream with an advertisement that corresponds to demographic characteristics of that particular subscriber.

7. The system according to claim 6, wherein the one or more program streams include splice points and wherein the splicer element splices an advertising stream with a program stream, wherein the advertising stream includes one or more stored advertisements.

8. The system according to claim 7, wherein the splicer element comprises:
a plurality of input processors, one of the plurality of input processors receiving the program stream and another of the plurality of input processors receiving the advertising stream;
a plurality of data buffers, each of the plurality of data buffers coupled to a corresponding one of the plurality of input processors; and
at least one output processor coupled to the plurality of data buffers,
wherein, responsive to a splice point being identified in the advertising stream, one of the plurality of data buffers stores frames after the splice point in the advertising stream, and wherein, responsive to a splice point being identified in the program stream, the at least one output processor switches to the advertising stream so that a single bitstream is provided as output that includes frames from the program stream and advertising stream.

9. The method according to claim 1 or system according to claim 6, wherein N program streams are distributed via the switched communication network and wherein N x M ad-inserted streams are created at the egress node, where N and M are integers and where M represents the number of demographic groupings of the individual subscribers.

10. The method or system according to claim 9, wherein the switched communication network is an ATM-based network and wherein N program streams are encapsulated in Internet Protocol (IP) packets for distribution via the ATM-based network.
